(19) Europäisches Patentamt
European Patent Office
Office européen des brevets

(11) **EP 2 752 447 B1**

(12) **EUROPEAN PATENT SPECIFICATION**

(45) Date of publication and mention
of the grant of the patent:
**15.04.2015 Bulletin 2015/16**

(51) Int Cl.:
***C08K 3/06*** *(2006.01)*     ***B60C 9/18*** *(2006.01)*
***C08L 7/00*** *(2006.01)*

(21) Application number: **13196035.3**

(22) Date of filing: **06.12.2013**

(54) **Pneumatic tire**

Luftreifen

Pneu

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2012 JP 2012277093**

(43) Date of publication of application:
**09.07.2014 Bulletin 2014/28**

(73) Proprietor: **SUMITOMO RUBBER INDUSTRIES,
LTD.
Kobe-shi, Hyogo-ken, 651-0072 (JP)**

(72) Inventor: **Miyazaki, Tatsuya
Kobe-shi,, Hyogo 651-0072 (JP)**

(74) Representative: **Manitz, Finsterwald & Partner
GbR
Martin-Greif-Strasse 1
80336 München (DE)**

(56) References cited:
**EP-A2- 1 785 284        WO-A1-2008/046430
US-A1- 2010 163 151**

- **DATABASE WPI Week 201035 Thomson
Scientific, London, GB; AN 2010-F40602
XP002723436, & JP 2010 111776 A (SUMITOMO
RUBBER IND LTD) 20 May 2010 (2010-05-20)**
- **DATABASE WPI Week 200938 Thomson
Scientific, London, GB; AN 2009-J68758
XP002723437, & JP 2009 114385 A (SUMITOMO
RUBBER IND LTD) 28 May 2009 (2009-05-28)**

**Description**

TECHNICAL FIELD

The present invention relates to a pneumatic tire.

BACKGROUND ART

A pneumatic tire includes a tread contacting the road surface, as well as various components such as a breaker cushion, breaker, jointless band, and undertread. In the conventional design of formulations of rubber compositions for these components, the rubber compositions for components are individually subjected to lab testing so that the best formulation of a rubber composition can be designed for each individual component (for example, see Patent Literatures 1 to 3). Then, tire components are formed from the respective best rubber compositions based on the lab testing results, and subsequently assembled with each other to produce a pneumatic tire. Unfortunately, the resulting pneumatic tire tends to have lower durability than expected from the results of the lab testing for each individual component.

CITATION LIST

PATENT LITERATURE

Patent Literature 1: JP 4308289 B
Patent Literature 2: JP 2008-24913 A
Patent Literature 3: JP 4246245 B

SUMMARY OF INVENTION

TECHNICAL PROBLEM

The present invention aims to solve the problem mentioned above and provide a pneumatic tire with excellent durability.

SOLUTION TO PROBLEM

The present inventor conducted intensive studies on the problem and consequently hypothesized that sulfur migrates between tire components during vulcanization and during service, and this migration of sulfur changes the physical properties of each tire component, thereby making the durability of the produced pneumatic tire lower than expected from the lab testing results, in other words, the results of the testing performed on vulcanized test samples prepared from each of the rubber compositions for components alone.

The present inventor particularly focused on the migration of sulfur in the rubber composition for a breaker cushion which is used in a breaker cushion, and found that when the net sulfur content (amount of pure sulfur) derived from crosslinking agents in the rubber composition for a breaker cushion and the net sulfur content derived from crosslinking agents in the rubber composition used in a component adjacent to the breaker cushion (e.g. a breaker, jointless band, or undertread) (e.g. the rubber composition for a breaker cord topping, the rubber composition for a band cord topping, or the rubber composition for an undertread) satisfy a specific relation, the resulting pneumatic tire has excellent durability. The present inventor further defined the amount of sulfur according to the desired characteristic properties of each tire component. Thus, the present inventor completed the present invention.

The present invention relates to a pneumatic tire, including a breaker cushion and a breaker adjacent to the breaker cushion, wherein the breaker cushion is formed from a rubber composition for a breaker cushion, which contains an isoprene-based rubber in an amount of 35 to 100% by mass based on 100% by mass of a rubber component of the rubber composition for a breaker cushion and has a net sulfur content derived from crosslinking agents of 2.1 to 6.0 parts by mass for each 100 parts by mass of the rubber component, and the breaker includes breaker cords topped with a rubber composition for a breaker cord topping, wherein a rubber vulcanizate obtained by vulcanizing the rubber composition for a breaker cushion alone at 170°C for 12 minutes, has an elongation at break of 350% or more, and the net sulfur content derived from crosslinking agents in the rubber composition for a breaker cushion and a net sulfur content derived from crosslinking agents in the rubber composition for a breaker cord topping satisfy the following relation:

$$0.00 < \text{(the net sulfur content derived from crosslinking agents in the rubber composition for a breaker cord topping)} - \text{(the net sulfur content derived from crosslinking agents in the rubber composition for a breaker cushion)} < 3.99.$$

Preferably, the pneumatic tire further includes a jointless band or undertread, each adjacent to the breaker cushion, wherein the jointless band includes band cords topped with a rubber composition for a band cord topping, and the undertread is formed from a rubber composition for an undertread, wherein the net sulfur content derived from crosslinking agents in the rubber composition for a breaker cushion and a net sulfur content derived from crosslinking agents in the rubber composition for a band cord topping or for an undertread satisfy the following relation:

$$-3.2 < \text{(the net sulfur content derived from crosslinking agents in the rubber composition for a band cord topping or for an undertread)} - \text{(the net sulfur content derived from crosslinking agents in the rubber composition for a breaker cushion)} < 3.0.$$

Preferably, in the pneumatic tire, the rubber composition for a band cord topping or for an undertread contains an isoprene-based rubber in an amount of 50 to 100% by mass based on 100% by mass of a rubber component of the rubber composition for a band cord topping or for an undertread, and has a net sulfur content derived from crosslinking agents of 2.5 to 6.0 parts by mass for each 100 parts by mass of the rubber component; a rubber vulcanizate obtained by vulcanizing the rubber composition for a band cord topping or for an undertread alone at 170°C for 12 minutes, has an elongation at break of 350% or more; and the jointless band or undertread has a thickness of 0.2 to 1.5 mm.

In the pneumatic tire, the rubber composition for a breaker cushion preferably contains the isoprene-based rubber in an amount of 85% by mass or more based on 100% by mass of the rubber component thereof.

ADVANTAGEOUS EFFECTS OF INVENTION

The pneumatic tire of the present invention includes a breaker cushion and a breaker adjacent to the breaker cushion; the breaker cushion is formed from a rubber composition for a breaker cushion, which contains a specific amount of an isoprene-based rubber, has a specific net sulfur content derived from crosslinking agents and has an elongation at break of a specific value or more; the breaker includes breaker cords topped with a rubber composition for a breaker cord topping; and the net sulfur content derived from crosslinking agents in the rubber composition for a breaker cushion and the net sulfur content derived from crosslinking agents in the rubber composition for a breaker cord topping satisfy a specific relation. Consequently, the pneumatic tire of the present invention is excellent in durability. Additionally, favorable handling stability, fuel economy, and elongation at break are simultaneously achieved.

BRIEF DESCRIPTION OF DRAWINGS

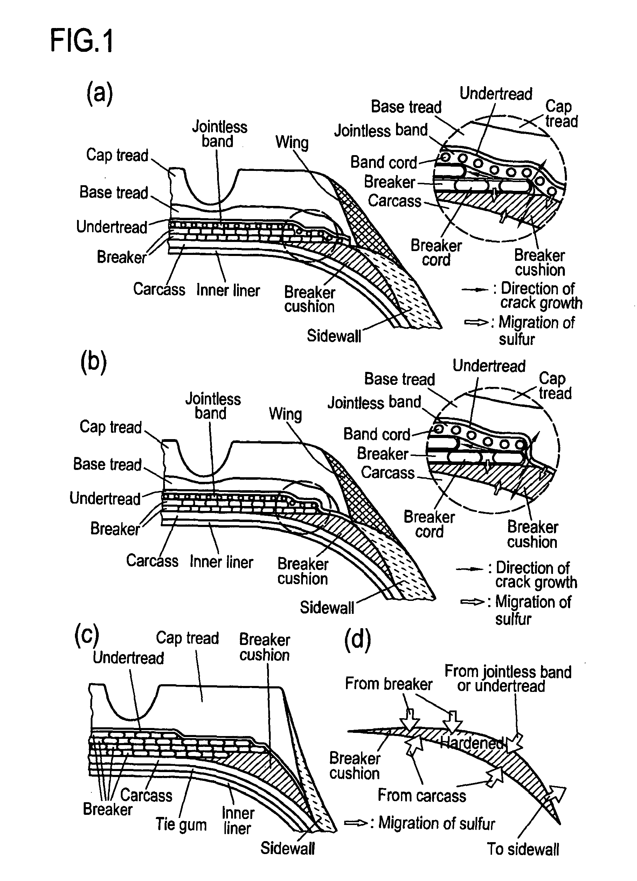

FIG. 1(a) shows an exemplary schematic cross-sectional view of a peripheral area of a breaker cushion of a tire for passenger vehicles.
FIG. 1(b) shows another exemplary schematic cross-sectional view of a peripheral area of a breaker cushion of a tire for passenger vehicles.
FIG. 1(c) shows an exemplary schematic cross-sectional view of a peripheral area of a breaker cushion of a tire for heavy loads, light trucks, large SUVs, and large passenger vehicles.
FIG. 1(d) shows an exemplary schematic cross-sectional view illustrating the migration of sulfur in a peripheral area of a breaker cushion that contains a relatively small amount of sulfur (e.g. cushion formulations 1 and 2 in Table 2).

DESCRIPTION OF EMBODIMENTS

The pneumatic tire of the present invention includes a breaker cushion and a breaker adjacent to the breaker cushion; the breaker cushion is formed from a rubber composition for a breaker cushion, which contains a specific amount of an isoprene-based rubber, has a specific net sulfur content (amount of pure sulfur) derived from crosslinking agents and has an elongation at break of a specific value or more; the breaker includes breaker cords topped with a rubber composition for a breaker cord topping; and the net sulfur content derived from crosslinking agents in the rubber composition for a breaker cushion and the net sulfur content derived from crosslinking agents in the rubber composition for a breaker cord topping satisfy a specific relation. Hereinafter, the "pure sulfur derived from crosslinking agents" is also referred to simply as sulfur.

In the context herein, the amounts of chemicals (e.g. crosslinking agent) incorporated in the rubber composition for a breaker cushion, a breaker cord topping, a band cord topping, or an undertread each mean the theoretical amount in the rubber composition before crosslinking. In other words, the amounts of chemicals contained in the rubber composition for a breaker cushion, a breaker cord topping, a band cord topping, or an undertread mean the theoretical amounts of chemicals contained in the unvulcanized rubber composition for a breaker cushion, a breaker cord topping, a band cord topping, or an undertread. The theoretical amount refers to the amount of a chemical charged into a kneader in the preparation of a rubber composition.

The breaker cushion refers to a component for protecting a breaker, provided inwardly from the breaker in the radial direction of the tire so as to be in contact with the breaker. Provided around the breaker cushion are a jointless band, an undertread, a carcass, and a sidewall, in addition to the breaker.

The tire for passenger vehicles shown in FIG. 1(a), for example, includes a breaker cushion facing inwardly in the radial direction of the tire to be in contact with a carcass and facing outwardly in the radial direction of the tire to be in contact with a breaker, a jointless band, and a sidewall. The tire for passenger vehicles shown in FIG. 1(b) includes a breaker cushion facing inwardly in the radial direction of the tire to be in contact with a carcass and facing outwardly in the radial direction of the tire to be in contact with a breaker, an undertread, and a sidewall. Moreover, the tire for heavy loads, light trucks, large SUVs, and large passenger vehicles shown in FIG. 1(c) includes a breaker cushion facing inwardly in the radial direction of the tire to be in contact with a carcass and facing outwardly in the radial direction of the tire to be in contact with a breaker, an undertread, and a sidewall. The breaker cushions are thus in contact with a breaker, jointless band, undertread, carcass, and sidewall.

In general, rubber compositions, especially rubber compositions for sidewalls, and then rubber compositions for breaker cushions, which are used in breaker cushions, contain a relatively small amount of sulfur to maintain the elongation at break and crack growth resistance as much as possible after oxidative degradation.

On the other hand, conventional rubber compositions for breakers, jointless bands, and carcasses contain a relatively large amount of sulfur to ensure good adhesion to cords. Meanwhile, if cut ends of a breaker or jointless band are not properly treated, a part of filaments forming a cord in such a component may be exposed. In order to produce tires with good quality even in such a case, conventional rubber compositions used in undertreads, which are provided outwardly from those components in the radial direction of the tire, also contain a relatively large amount of sulfur to ensure good adhesion to cords.

Each of conventional tires thus includes, around and adjacent to a breaker cushion with a relatively small amount of sulfur: a sidewall with a smaller amount of sulfur than that in the breaker cushion, and a breaker, jointless band, undertread, and carcass, each with a relatively large amount of sulfur.

Therefore, sulfur migrates according to the concentration gradient in the peripheral area of the breaker cushion during vulcanization and during service. Specifically, as shown in FIGs. 1(a), 1(b), and 1(d), sulfur migrates from the breaker, jointless band, undertread, and carcass to the breaker cushion, and from the breaker cushion to the sidewall. This phenomenon makes the breaker cushion harder to decrease the elongation at break and crack growth resistance after oxidative degradation, thereby causing cracks around the edges of the breaker (see FIGS. 1(a) and 1(b)). The cracks propagate to the breaker cushion, thereby reducing the durability of the tire. In FIGs. 1(a), 1(b), and 1(d), the hollow arrows indicate the migration of sulfur, and the solid arrows indicate the directions of crack growth starting from the edge of the breaker. On the other hand, if the amount of sulfur in the rubber composition for a breaker cushion is increased, sulfur can be inhibited from migrating from the breaker, jointless band, undertread, and carcass to the breaker cushion; however, also in this case, oxidative degradation is caused due to the high sulfur content in the breaker cushion itself, which decreases elongation at break, and therefore reduces the durability of the tire as mentioned above.

In the present invention, in contrast, the breaker cushion is formed from a rubber composition for a breaker cushion, which contains a specific amount of an isoprene-based rubber, has a specific net sulfur content derived from crosslinking agents and has an elongation at break of a specific value or more; the breaker includes breaker cords topped with a rubber composition for a breaker cord topping; and the net sulfur content derived from crosslinking agents in the rubber composition for a breaker cushion and the net sulfur content derived from crosslinking agents in the rubber composition for a breaker cord topping satisfy a specific relation. Accordingly, the migration of sulfur can be inhibited so that the amount of migrating sulfur can be appropriately controlled, and good handling stability, fuel economy, and elongation at break can also be ensured, which leads to favorable durability. This is based on the finding that inhibition of the migration of sulfur between a breaker cushion and especially a breaker, among components adjacent to the breaker cushion, improves the tire durability. Although the results of lab testing, i.e., the results of the testing performed on vulcanized test samples prepared from each of rubber compositions for tire components alone, do not always correlate with the durability of a pneumatic tire as mentioned above, a rubber composition for a breaker cushion which alone has an elongation at break of a specific value or more is used in the present invention to ensure the minimum properties required of a breaker cushion.

The pneumatic tire of the present invention includes a breaker cushion and a breaker adjacent to the breaker cushion. Preferably, the pneumatic tire of the present invention further includes a jointless band or undertread, each adjacent to the breaker cushion.

A breaker cushion is a component for protecting a breaker, located inwardly from the breaker in the radial direction of the tire, adjacent to the tire-axially outer edge of the breaker, and between the outer edge of the breaker and a carcass, or, alternatively, a component placed between the breaker and the carcass and on the entire inside of the breaker. Specific examples of this component are shown in FIG. 1 of JP 2009-137438 A, FIG. 1 of JP 2006-273934 A, FIG. 1 of JP 2004-161862 A (which are incorporated by reference in their entirety), and the like.

A breaker is a component disposed outwardly from a carcass in the radial direction of the tire, and specific examples of this component are shown in FIG. 3 of JP 2003-94918 A, FIG. 1 of JP 2006-273934 A, FIG. 1 of JP 2004-161862 A (which are incorporated by reference in their entirety), and the like.

A jointless band is a component provided outwardly from a breaker in the radial direction of the tire for preventing the breaker from being lifted up from a carcass by the centrifugal force of the tire during driving the vehicle. Specific examples of this component are shown in FIG. 3 of JP 2009-007437 A (which is incorporated by reference in its entirety) and the like.

An undertread is a component located between a tread and a jointless band or breaker and covering the tire-radially outer part of the jointless band or breaker. Specific examples of this component are shown in FIG. 1 of JP 2009-191132 A (which is incorporated by reference in its entirety) and the like. Base treads are included within the scope of the term "undertread".

Here, the breaker cushion, breaker, jointless band, and undertread are also denoted as a cushion, brk, JLB, and U/T, respectively.

The breaker cushion and undertread in the present invention are respectively formed from a rubber composition for a breaker cushion and a rubber composition for an undertread, each of which contains a crosslinking agent. Moreover, in the present invention, the breaker includes breaker cords topped with a rubber composition for a breaker cord topping, which contains a crosslinking agent, whereas the jointless band includes band cords topped with a rubber composition for a band cord topping, which contains a crosslinking agent. Thus, each of the rubber composition for a breaker cushion, the rubber composition for an undertread, the rubber composition for a breaker cord topping, and the rubber composition for a band cord topping contains a crosslinking agent.

Examples of such crosslinking agents include sulfur-containing compounds having crosslinking effect, such as sulfur crosslinking agents, sulfur-containing hybrid crosslinking agents, and silane coupling agents added in the final kneading process.

Examples of the sulfur crosslinking agents include sulfurs commonly used for vulcanization in the rubber field. Specific examples thereof include powdered sulfur, precipitated sulfur, colloidal sulfur, insoluble sulfur, and highly dispersible sulfur.

Examples of the sulfur-containing hybrid crosslinking agents include alkyl sulfide crosslinking agents such as alkylphenol-sulfur chloride condensates; hexamethylene-1,6-bis(thiosulfate), disodium salt, dehydrate; and 1,6-bis(N,N'-dibenzylthiocarbamoyldithio)hexane, and dithiophosphates. More specifically, products such as Tackirol V200 produced by Taoka Chemical Co., Ltd., DURALINK HTS produced by Flexsys, Vulcuren VP KA9188 produced by LANXESS, and Rhenogran SDT-50 (phosphoryl polysulfide) produced by Rhein Chemie are commercially available.

In addition, the crosslinking agents in the present invention also include silane coupling agents mixed (added) in the final kneading process, but do not include silane coupling agents mixed in the base kneading process because these silane coupling agents preferentially react with silica.

Examples of the silane coupling agents include sulfur-containing (sulfide bond-containing) compounds conventionally used along with silica in the rubber industry, such as sulfide, mercapto, vinyl, amino, glycidoxy, nitro, and chloro silane coupling agents. Specific examples of commercially available products include Si69 and Si75 produced by Evonik.

In the present invention, the net sulfur content derived from crosslinking agents in the rubber composition for a breaker cushion and the net sulfur content derived from crosslinking agents in the rubber composition for a breaker cord topping adjacent to the former satisfy the following relation. This favorably improves the durability of a pneumatic tire. If the lower limit is 0.00 or less, the crosslink density of a rubber composition around the breaker edge excessively increases to reduce elongation at break and crack growth resistance, thereby leading to a decrease in tire durability. If the upper limit is 3.99 or more, sulfur tends to migrate to the breaker cushion and therefore make the breaker cushion harder to decrease the elongation at break and crack growth resistance after oxidative degradation, thereby leading to a decrease in tire durability.

$$0.00 < \text{(the net sulfur content derived from crosslinking agents in the rubber composition for a breaker cord topping)} - \text{(the net sulfur content derived from crosslinking agents in the rubber composition for a breaker cushion)} < 3.99$$

The net sulfur content derived from crosslinking agents as used herein means the total amount of sulfur contained in all the crosslinking agents mixed (added).

The lower limit in the relationship expression is preferably 0.20, more preferably 0.40, and still more preferably 0.70, and particularly preferably 0.90.

The upper limit in the relationship expression is preferably 3.75, and more preferably 3.50.

In the present invention, the following relationship preferably applies between the net sulfur contents derived from crosslinking agents in the rubber composition for a breaker cushion and in the abutting rubber composition for a band cord topping, or between the net sulfur contents derived from crosslinking agents in the rubber composition for a breaker cushion and in the abutting rubber composition for an undertread. This further favorably improves the durability of a pneumatic tire. This is based on the finding that inhibition of the migration of sulfur between a breaker cushion and a breaker, jointless band, or undertread (especially breaker), among components adjacent to the breaker cushion, improves the tire durability. When both the jointless band and undertread are adjacent to the breaker cushion, the jointless band (rubber composition for a band cord topping) preferably satisfies the following relation.

In the relationship expression, if the lower limit is -3.2 or less, the jointless band or undertread tends to undergo oxidative degradation to decrease elongation at break, which is likely to cause a rupture in the jointless band or undertread, and therefore likely to reduce the tire durability. Also if the upper limit is 3.0 or more, sulfur tends to migrate to the breaker cushion and therefore make the breaker cushion harder to decrease the elongation at break and crack growth resistance after oxidative degradation, thereby leading to a decrease in tire durability.

$$-3.2 < \text{(the net sulfur content derived from crosslinking agents in the rubber composition for a band cord topping or for an undertread)} - \text{(the net sulfur content derived from crosslinking agents in the rubber composition for a breaker cushion)} < 3.0$$

The lower limit in the relationship expression is preferably -3.1, more preferably -2.8, and still more preferably -2.5.

The upper limit in relationship expression is preferably 2.9.

The following will describe the rubber composition for a breaker cushion, the rubber composition for an undertread, the rubber composition for a breaker cord topping, and the rubber composition for a band cord topping, which are used in the present invention.

(Rubber composition for breaker cushion)

The total net sulfur content derived from crosslinking agents in the rubber composition for a breaker cushion is 2.1 to 6.0 parts by mass for each 100 parts by mass of the rubber component of the rubber composition for a breaker cushion. A net sulfur content of less than 2.1 parts by mass is likely to allow sulfur to migrate to the breaker cushion and therefore make the breaker cushion harder to decrease the elongation at break and crack growth resistance after oxidative degradation, thereby leading to a decrease in tire durability. If the net sulfur content is more than 6.0 parts by mass, the high sulfur content in the rubber composition for a breaker cushion itself makes the breaker cushion harder, thereby leading to a decrease in tire durability as described above. The total net sulfur content is preferably 2.2 to 5.6 parts by mass, and more preferably 2.3 to 5.0 parts by mass, for each 100 parts by mass of the rubber component.

Examples of materials usable as the rubber component of the rubber composition for a breaker cushion include, but not limited to, isoprene-based rubbers such as natural rubber (NR) and isoprene rubber (IR), and other diene rubbers such as butadiene rubber (BR), styrene-butadiene rubber (SBR), styrene isoprene butadiene rubber (SIBR), chloroprene rubber (CR), and acrylonitrile butadiene rubber (NBR). Preferred among these are isoprene-based rubbers and BR, in terms of achieving favorable durability while maintaining favorable handling stability, fuel economy, and elongation at break.

The NR as an isoprene-based rubber may be one commonly used in the tire industry, such as SIR20, RSS 3, and TSR20. Similarly, the IR may be one commonly used in the tire industry, such as IR2200.

The amount of the isoprene-based rubber, based on 100% by mass of the rubber component, is preferably 35% by mass or more, more preferably 60% by mass or more, still more preferably 80% by mass or more, and particularly preferably 85% by mass or more, and may be 100% by mass. The isoprene-based rubber in that range leads to favorable durability while maintaining favorable handling stability, fuel economy, and elongation at break.

The BR is not particularly limited, and may be one commonly used in the tire industry, such as high cis BR such as BR1220 produced by ZEON CORPORATION, CB24 produced by LANXESS, and BR150B produced by Ube Industries, Ltd.; 1,2-syndiotactic polybutadiene crystal (SPB)-containing BR such as VCR412 and VCR617 produced by Ube Industries, Ltd.; high vinyl BR such as Europrene BR HV80 produced by Polimeri Europa; and BR synthesized with a rare earth catalyst (rare earth BR). Also, tin-modified butadiene rubbers (tin-modified BRs), which have been modified with a tin compound, are usable. Moreover, various modified BRs for silica formulations may also be suitably used. Preferred among these are high cis BR polymerized with a neodymium catalyst, tin-modified BR, and SPB-containing BR, in terms of achieving favorable durability while maintaining favorable handling stability, fuel economy, and elongation at break.

The tin-modified BR may be a conventional one, and may suitably be, for example, a tin-modified BR polymerized with a lithium initiator, having a vinyl bond content of 5 to 50% by mass, a ratio of Mw/Mn of 2.0 or lower, and a tin atom content of 50 to 3,000 ppm.

Similarly, the SPB-containing BR may be a conventional one.

The rubber composition for a breaker cushion used for a low profile tire or the like does not have to contain BR. However, the rubber composition used for an ordinary general-purpose tire, which places emphasis on crack growth resistance and reversion resistance, preferably contains BR in an amount of 20% by mass or more based on 100% by mass of the rubber component. The amount of BR is preferably 70% by mass or less, and more preferably 60% by mass or less. BR in that range leads to favorable durability while maintaining favorable abrasion resistance, handling stability, fuel economy, and elongation at break.

The rubber composition for a breaker cushion may contain carbon black and/or silica. The total amount of carbon black and/or silica may be appropriately set according to required properties of the breaker cushion, such as handling stability, fuel economy, and elongation at break. The total amount thereof is preferably 20 to 120 parts by mass, and more preferably 30 to 80 parts by mass, for each 100 parts by mass of the rubber component.

The rubber composition for a breaker cushion preferably contains carbon black. The use of carbon black enhances reinforcement, thereby improving durability and handling stability. The combined use of carbon black and silica provides more favorable durability to a tire. Examples of usable carbon black include, but not limited to, GPF, FEF, HAF, ISAF, and SAF. Usable silica is not particularly limited either.

The carbon black, if used, preferably has a nitrogen adsorption specific surface area ($N_2SA$) of 20 $m^2/g$ or more, more preferably 60 $m^2/g$ or more. A $N_2SA$ of less than 20 $m^2/g$ may lead to a decrease in durability and handling stability. Also, the $N_2SA$ of carbon black is preferably 120 $m^2/g$ or less, and more preferably 100 $m^2/g$ or less. A $N_2SA$ of more than 120 $m^2/g$ may cause insufficient fuel economy and processability.

Here, the nitrogen adsorption specific surface area of carbon black is determined in accordance with JIS K 6217-2:2001.

The amount of carbon black is preferably 10 parts by mass or more, more preferably 20 parts by mass or more, and still more preferably 30 parts by mass or more, for each 100 parts by mass of the rubber component. An amount of less than 10 parts by mass tends to provide insufficient reinforcement, leading to poor durability and handling stability. The amount of carbon black is preferably 80 parts by mass or less, more preferably 55 parts by mass or less, and still more preferably 50 parts by mass or less, for each 100 parts by mass of the rubber component. An amount of more than 80 parts by mass may deteriorate fuel economy.

The rubber composition for a breaker cushion may contain, in addition to the above components, compounding agents conventionally used in the rubber industry, such as other reinforcing fillers, waxes, antioxidants, age resisters, stearic acid, zinc oxide, cobalt stearate, and softeners. The rubber composition may also contain a vulcanization accelerator such as guanidine, aldehyde-amine, aldehyde-ammonia, thiazole, sulfenamide, thiourea, dithiocarbamate, and xanthate vulcanization accelerators.

(Rubber composition for breaker cord topping)

The total net sulfur content derived from crosslinking agents in the rubber composition for a breaker cord topping is preferably 2.8 parts by mass or more, more preferably 3.0 parts by mass or more, still more preferably 4.0 parts by mass or more, and particularly preferably 4.5 parts by mass or more, for each 100 parts by mass of the rubber component of the rubber composition for a breaker cord topping. A net sulfur content of less than 2.8 parts by mass tends to lead to poor adhesion to cords, thereby reducing durability. The total net sulfur content is preferably 6.4 parts by mass or less, more preferably 6.1 parts by mass or less, and still more preferably 5.8 parts by mass or less, for each 100 parts by mass of the rubber component. A net sulfur content of more than 6.4 parts by mass tends to cause oxidative degradation to decrease elongation at break, thereby leading to a decrease in durability.

Materials usable as the rubber component of the rubber composition for a breaker cord topping are not particularly limited, and the same diene rubbers as mentioned for the rubber composition for a breaker cushion may be used. In particular, isoprene-based rubbers are preferred in terms of achieving favorable durability while maintaining favorable handling stability, fuel economy, and elongation at break. The same isoprene-based rubbers as mentioned above are usable.

The amount of the isoprene-based rubber, based on 100% by mass of the rubber component, is preferably 35% by mass or more, more preferably 60% by mass or more, still more preferably 75% by mass or more, and particularly preferably 85% by mass or more, and may be 100% by mass. The isoprene-based rubber in that range leads to favorable durability while maintaining favorable handling stability, fuel economy, and elongation at break.

The rubber composition for a breaker cord topping may contain carbon black and/or silica. The total amount of carbon black and/or silica may be appropriately set according to required properties of the breaker, such as handling stability, fuel economy, and elongation at break. The total amount is preferably 30 to 120 parts by mass, and more preferably 45 to 80 parts by mass, for each 100 parts by mass of the rubber component.

The rubber composition for a breaker cord topping preferably contains carbon black. The same kinds of carbon black as mentioned above may be suitably used.

The amount of carbon black is preferably 10 parts by mass or more, more preferably 30 parts by mass or more, and still more preferably 50 parts by mass or more, for each 100 parts by mass of the rubber component. An amount of less than 10 parts by mass tends to provide insufficient reinforcement, leading to poor durability and handling stability. The amount of carbon black is preferably 100 parts by mass or less, and more preferably 80 parts by mass or less, for each 100 parts by mass of the rubber component. An amount of more than 100 parts by mass may deteriorate fuel economy.

The rubber composition for a breaker cord topping may contain, in addition to the aforementioned rubber component, silica and carbon black, similar compounding materials as mentioned for the rubber composition for a breaker cushion. Also, the rubber composition may contain a resin such as phenolic resin, resorcinol resin, melamine resin, and modified resins thereof.

(Rubber composition for undertread)

The total net sulfur content derived from crosslinking agents in the rubber composition for an undertread is preferably 2.5 parts by mass or more, more preferably 2.8 parts by mass or more, and still more preferably 3.0 parts by mass or more, for each 100 parts by mass of the rubber component of the rubber composition for an undertread. A net sulfur content of less than 2.5 parts by mass tends to allow a large amount of sulfur to migrate from the breaker rubber and therefore make the undertread harder, thereby leading to a decrease in durability. The total net sulfur content is preferably 6.4 parts by mass or less, more preferably 6.0 parts by mass or less, and still more preferably 5.8 parts by mass or less, for each 100 parts by mass of the rubber component. A net sulfur content of more than 6.4 parts by mass tends to cause oxidative degradation to decrease elongation at break, thereby leading to a decrease in durability.

Materials usable as the rubber component of the rubber composition for an undertread are not particularly limited, and the same diene rubbers as mentioned for the rubber composition for a breaker cushion may be used. In particular, isoprene-based rubbers are preferred in terms of achieving favorable durability while maintaining favorable handling stability, fuel economy, and elongation at break. The same isoprene-based rubbers as mentioned above are usable.

The amount of the isoprene-based rubber, based on 100% by mass of the rubber component, is preferably 35% by mass or more, more preferably 45% by mass or more, still more preferably 65% by mass or more, and particularly preferably 85% by mass or more, and may be 100% by mass. The isoprene-based rubber in that range leads to favorable durability while maintaining favorable handling stability, fuel economy, and elongation at break.

The rubber composition for an undertread may contain carbon black and/or silica. The total amount of carbon black and/or silica may be appropriately set according to required properties of the undertread, such as handling stability, fuel economy, and elongation at break. The total amount thereof is preferably 30 to 100 parts by mass, and more preferably 45 to 80 parts by mass, for each 100 parts by mass of the rubber component.

The rubber composition for an undertread preferably contains carbon black. The same kinds of carbon black as mentioned above may be suitably used.

The amount of carbon black is preferably 10 parts by mass or more, more preferably 30 parts by mass or more, and still more preferably 50 parts by mass or more, for each 100 parts by mass of the rubber component. An amount of less than 10 parts by mass tends to provide insufficient reinforcement, leading to poor durability and handling stability. The amount of carbon black is preferably 100 parts by mass or less, and more preferably 80 parts by mass or less, for each 100 parts by mass of the rubber component. An amount of more than 100 parts by mass may deteriorate fuel economy.

The rubber composition for an undertread may contain, in addition to the aforementioned rubber component, silica and carbon black, similar compounding materials as mentioned for the rubber composition for a breaker cushion.

The rubber composition for an undertread also preferably contains a cobalt salt of an organic acid (e.g. cobalt stearate and cobalt neodecanoate) to ensure adhesion to cords in case a part of the breaker cords (steel cords) is not covered with the rubber composition for a breaker cord topping. However, when an improvement in the process, such as an improvement in the accuracy of breaker joint, is made, the addition of the cobalt salt of an organic acid is not necessary.

(Rubber composition for band cord topping)

The total net sulfur content derived from crosslinking agents in the rubber composition for a band cord topping is preferably 2.0 parts by mass or more, more preferably 2.3 parts by mass or more, and still more preferably 2.5 parts by mass or more, for each 100 parts by mass of the rubber component of the rubber composition for a band cord topping. A net sulfur content of less than 2.0 parts by mass tends to provide insufficient adhesion to fiber cords, leading to a decrease in durability. The total net sulfur content is preferably 6 parts by mass or less, more preferably 4.5 parts by mass or less, and still more preferably 3.5 parts by mass or less, for each 100 parts by mass of the rubber component. A net sulfur content of more than 6 parts by mass tends to cause oxidative degradation to decrease elongation at break, thereby leading to a decrease in durability.

Materials usable as the rubber component of the rubber composition for a band cord topping are not particularly limited, and the same diene rubbers as mentioned for the rubber composition for a breaker cushion may be used. In particular, isoprene-based rubbers and SBR are preferred in terms of achieving favorable durability while maintaining favorable handling stability, fuel economy, and elongation at break. The same isoprene-based rubbers as mentioned above are usable.

In the rubber composition for a band cord topping, the amount of the isoprene-based rubber, based on 100% by mass of the rubber component, is preferably 25% by mass or more, and more preferably 50% by mass or more. The amount of the isoprene-based rubber may be 100% by mass, and is preferably 80% by mass or less. The isoprene-based rubber in that range leads to favorable durability while maintaining favorable handling stability, fuel economy, and elongation at break.

The SBR is not particularly limited, and examples thereof include solution-polymerized SBR and emulsion-polymerized SBR. Various modified SBRs for silica formulations are also usable.

In the rubber composition for a band cord topping, the amount of SBR is preferably 10 to 60% by mass, and more preferably 20 to 40% by mass, based on 100% by mass of the rubber component.

The rubber composition for a band cord topping may contain carbon black and/or silica. The amount of carbon black and/or silica may be appropriately set according to required properties of the jointless band, such as handling stability, fuel economy, and elongation at break. The total amount thereof is preferably 20 to 100 parts by mass, and more preferably 30 to 60 parts by mass, for each 100 parts by mass of the rubber component.

The rubber composition for a band cord topping preferably contains carbon black. The same kinds of carbon black as mentioned above may be suitably used.

The amount of carbon black is preferably 10 parts by mass or more, more preferably 20 parts by mass or more, and still more preferably 30 parts by mass or more, for each 100 parts by mass of the rubber component. An amount of less than 10 parts by mass tends to provide insufficient reinforcement, leading to poor durability and handling stability. The amount of carbon black is preferably 100 parts by mass or less, and more preferably 60 parts by mass or less, for each 100 parts by mass of the rubber component. An amount of more than 100 parts by mass may deteriorate elongation at break and fuel economy.

The rubber composition for a band cord topping may contain, in addition to the aforementioned rubber component, silica and carbon black, similar compounding materials as mentioned for the rubber composition for a breaker cord topping.

(Pneumatic tire)

The pneumatic tire of the present invention may be produced by a conventionally known method such as the following method.

First, all components excepting the crosslinking agent and vulcanization accelerator are charged (or added) into a rubber kneading device such as a Banbury mixer or open roll mill and they are kneaded (base kneading process).

Next, the crosslinking agent and vulcanization accelerator are charged (added) into the kneaded mixture and they are kneaded. Thus, unvulcanized rubber compositions for a breaker cushion, for an undertread, for a breaker cord topping, and for a band cord topping are separately produced.

Subsequently, each of the unvulcanized rubber compositions is extruded into the shape of a breaker cushion, undertread, breaker, or jointless band (in the preparation of a breaker, the upper and lower surfaces of the breaker cords are covered with the unvulcanized sheet-shaped rubber composition for a breaker cord topping under pressure to form a breaker; in the preparation of a jointless band, the upper and lower surfaces of the band cords are covered with the unvulcanized sheet-shaped rubber composition for a band cord topping under pressured to form a jointless band). These tire components are then assembled with other tire components in a tire building machine to prepare an unvulcanized tire (raw cover). The unvulcanized tire is heated and pressurized in a vulcanizer to produce a pneumatic tire.

Examples of the breaker cords include steel cords for tires, 2+2/0.23 cords (tire cords produced by twisting two cords with two cords each having a cord diameter of 0.23 mm), and brass plated high tension cords.

Examples of the band cords include single twisted cords made of organic fibers such as nylon 66 fibers, aramid fibers, nylon fibers, polyethylene naphthalate (PEN) fibers, polyethylene (PE) fibers, and polyethylene terephthalate (PET) fibers, and composite cords in which two or more different organic fiber cords are twisted.

For achieving favorable tire durability, the rubber compositions for a breaker cushion, for an undertread, for a breaker cord topping, and for a band cord topping each preferably have an elongation at break of a specific value or more after vulcanization at 170°C for 12 minutes. In other words, the vulcanized rubber compositions for a breaker cushion, for an undertread, for a breaker cord topping, and for a band cord topping, each of which is obtained by kneading the above-mentioned rubber component and other compounding agents added as needed, in a Banbury mixer, kneader, or open roll mill, and then vulcanizing the resulting mixture at 170°C for 12 minutes, each preferably have an elongation at break of a specific value or more.

The rubber vulcanizate obtained by vulcanizing the rubber composition for a breaker cushion alone at 170°C for 12 minutes, has an elongation at break (at 25°C) of 350% or more, preferably 450% or more, more preferably 550% or more, and still more preferably 600% or more. If it has an elongation at break of less than 350%, the elongation at break EB and crack growth resistance are likely to be reduced due to the degradation through the use, and therefore the durability is reduced. The upper limit of the elongation at break is not limited in terms of performance. However, the elongation at break is typically 800% or less because of the difficulty in producing a rubber composition with an elongation at break of more than 800%.

The rubber vulcanizate obtained by vulcanizing the rubber composition for an undertread alone at 170°C for 12 minutes, preferably has an elongation at break (at 25°C) of 350% or more, more preferably 400% or more, and still more preferably 450% or more. If it has an elongation at break of less than 350%, the elongation at break EB is likely to be reduced due to the degradation through the use, and therefore the durability is reduced. The upper limit of the elongation at break is not limited in terms of performance. However, the elongation at break is typically 800% or less because of the difficulty in producing a rubber composition with an elongation at break of more than 800%.

The rubber vulcanizate obtained by vulcanizing the rubber composition for a breaker cord topping alone at 170°C for 12 minutes, preferably has an elongation at break (at 25°C) of 350% or more, more preferably 400% or more, and still more preferably 450% or more. If it has an elongation at break of less than 350%, the elongation at break EB is likely to be reduced due to the degradation through the use, and therefore the durability is reduced. The upper limit of the elongation at break is not limited in terms of performance. However, the elongation at break is typically 800% or less because of the difficulty in producing a rubber composition with an elongation at break of more than 800%.

The rubber vulcanizate obtained by vulcanizing the rubber composition for a band cord topping alone at 170°C for 12 minutes, preferably has an elongation at break (at 25°C) of 350% or more, more preferably 380% or more, and still more preferably 450% or more. If it has an elongation at break of less than 350%, the elongation at break EB is likely to be reduced due to the degradation through the use, and therefore the durability is reduced. The upper limit of the elongation at break is not limited in terms of performance. However, the elongation at break is typically 800% or less because of the difficulty in producing a rubber composition with an elongation at break of more than 800%.

The elongation at break herein refers to a value determined at 25°C according to the method mentioned in Examples.

The jointless band of the pneumatic tire of the present invention preferably has a thickness of 0.2 to 1.5 mm, more preferably 0.5 to 1.3 mm. When the thickness of the jointless band is in that range, a proper thickness of rubber is ensured between the steel breaker edge and the band fibers, which further improves tire durability.

Here, The thickness of the jointless band means the thickness (the length in the radial direction of the tire) of the jointless band at a point on a line extending outwardly from the tire-axially outer edge of the breaker in the radial direction of the tire (i.e., the total of the diameter of the band cords and the thickness of the rubber composition covering the band cords, namely, the total thickness of the calendered fabric).

The undertread of the pneumatic tire of the present invention preferably has a thickness of 0.2 to 1.5 mm, more preferably 0.3 to 1.0 mm. The undertread with a thickness in that range can produce a buffering effect between a tread having a large amount of oil and a small amount of sulfur and a jointless band or breaker each having a small amount of oil and a large amount of sulfur, thereby improving the adhesion between the tread and breaker. This further improves tire durability.

Here, the thickness of the undertread means the thickness (the length in the radial direction of the tire) of the undertread at a point on a line extending outwardly from the tire-axially outer edge of the breaker in the radial direction of the tire.

The pneumatic tire of the present invention is suitable as a tire for passenger vehicles, for large passenger vehicles, for large SUVs, for heavy loads such as trucks and buses, and for light trucks, and is usable as a summer tire and as a winter tire (studless tire) in these applications.

EXAMPLES

The following is the list of chemicals used in the examples and comparative examples.

<NR>: TSR20

<IR>: IR2200

<BR1>: CB24 (high cis BR synthesized with Nd catalyst) produced by LANXESS

<BR2>: Nipol BR1250H (tin-modified BR polymerized with lithium initiator, vinyl bond content: 10 to 13% by mass, Mw/Mn: 1.5, tin atom content: 250 ppm) produced by ZEON CORPORATION

<BR3>: VCR617 produced by Ube Industries, Ltd.

<SBR>: SBR1502 produced by JSR CORPORATION

<Carbon black 1>: Diablack N326 ($N_2SA$: 84 $m^2$/g) produced by Mitsubishi Chemical Corporation

<Carbon black 2>: Diablack N550 ($N_2SA$: 41 $m^2$/g) produced by Mitsubishi Chemical Corporation

<Silica>: ULTRASIL VN 3 ($N_2SA$: 175 $m^2$/g) produced by Evonik Degussa

<Wax>: Ozoace 0355 produced by Nippon Seiro Co., Ltd.

<Antioxidant 1>: Antigene 6C (N-(1,3-dimethylbutyl)-N'-phenyl-p-phenylenediamine) produced by Sumitomo Chemical Co., Ltd.

<Antioxidant 2>: Antigene FR (purified reaction product of amine and ketone, containing no amine residue, quinoline antioxidant) produced by Sumitomo Chemical Co., Ltd.

<Zinc oxide>: Ginrei R produced by Toho Zinc Co., Ltd.

<Phenol resin PR 12686>: PR 12686 (cashew oil-modified phenolic resin) produced by Sumitomo Bakelite Co., Ltd.

<Sumikanol 620>: Sumikanol 620 (modified resorcinol resin (modified resorcinol-formaldehyde condensate)) produced by Taoka Chemical Co., Ltd.

<Stearic acid>: Stearic acid "Tsubaki" produced by NOF Corporation

<Sumikanol 507A>: Sumikanol 507A (modified etherified methylol melamine resin (partial condensate of hexamethylol melamine pentamethyl ether (HMMPME)), containing 35% by mass of silica and oil) produced by Sumitomo Chemical Co., Ltd.

<Cobalt stearate>: cost-F (cobalt content: 9.5% by mass, stearic acid content: 90.5% by mass) produced by DIC Corporation

<20% oil-containing insoluble sulfur>: Crystex HSOT 20 (insoluble sulfur containing 80% by mass of sulfur and 20% by mass of oil) produced by Flexsys

<10% oil-containing insoluble sulfur>: Seimi sulfur (insoluble sulfur containing 60% or more of carbon disulfide insoluble matter, oil content: 10% by mass) produced by NIPPON KANRYU INDUSTRY CO., LTD.

<Vulcanization accelerator 1>: Nocceler DZ (N,N'-dicyclohexyl-2-benzothiazolylsulfenamide (DCBS)) produced by Ouchi Shinko Chemical Industrial Co., Ltd.

<Vulcanization accelerator 2>: Nocceler NS (N-tert-butyl-2-benzothiazolylsulfenamide (TBBS)) produced by Ouchi Shinko Chemical Industrial Co., Ltd.

<C5 resin>: Marukarez T-100AS (C5 petroleum resin: aliphatic petroleum resin formed mainly from olefins and diolefins in C5 fraction obtained by naphtha cracking) (softening point: 100°C) produced by Maruzen Petrochemical Co. , Ltd.

<TDAE>: Vivatec 500 (aromatic oil) produced by H&R

<Examples and Comparative Examples>

(Rubber composition for breaker cord topping)

The materials according to each of the formulations shown in Table 1, excepting the cobalt stearate, sulfur, and vulcanization accelerator, were kneaded in a 1.7-L Banbury mixer at 150°C for 5 minutes to obtain a kneaded mixture (base kneading process 1). The cobalt stearate was then added to the kneaded mixture and the mixture was kneaded in the 1.7-L Banbury mixer at 135°C for 3 minutes to obtain a kneaded mixture (base kneading process 2). The sulfur and vulcanization accelerator were then added to the kneaded mixture and the mixture was kneaded in an open roll mill at 105°C for 3 minutes to obtain an unvulcanized rubber composition (final kneading process).

The obtained unvulcanized rubber composition was press vulcanized at 170°C for 12 minutes to prepare a vulcanized rubber composition for a breaker cord topping.

(Rubber compositions for band cord topping and for undertread)

The materials according to each of the formulations shown in Table 1, excepting the sulfur and vulcanization accelerator, were kneaded in a 1.7-L Banbury mixer at 150°C for 5 minutes to obtain a kneaded mixture (base kneading process). The sulfur and vulcanization accelerator were then added to the kneaded mixture and the mixture was kneaded in an open roll mill at 105°C for 3 minutes to obtain an unvulcanized rubber composition (final kneading process).

The obtained unvulcanized rubber composition was press vulcanized at 170°C for 12 minutes to prepare a vulcanized rubber composition for a band cord topping or a vulcanized rubber composition for an undertread.

(Rubber composition for breaker cushion)

The materials according to each of the formulations shown in Tables 2 and 3, excepting the sulfur and vulcanization accelerator, were kneaded in a 1.7-L Banbury mixer at 150°C for 5 minutes to obtain a kneaded mixture (base kneading process). The sulfur and vulcanization accelerator were then added to the kneaded mixture and the mixture was kneaded in an open roll mill at 105°C for 3 minutes to obtain an unvulcanized rubber composition (final kneading process).

The obtained unvulcanized rubber composition was press vulcanized at 170°C for 12 minutes to prepare a vulcanized rubber composition for a breaker cushion.

(Pneumatic tire)

In addition, each of the unvulcanized rubber compositions for a breaker cord topping, for a band cord topping, for an undertread, and for a breaker cushion was extruded and formed into the shape of each tire component and assembled with other tire components in a tire building machine. The assembly was vulcanized at 170°C for 12 minutes to prepare a test tire (size: 195/65R15) in each example or comparative example (crosslinking process). Here, in the forming step, a breaker was prepared by forming the obtained unvulcanized rubber composition for a breaker cord topping into a sheet and covering steel cords with the sheet to form a breaker, whereas a jointless band was prepared by forming the obtained unvulcanized rubber composition for a band cord topping into a sheet and covering nylon 66 fiber cords with the sheet to form a jointless band. The jointless band and undertread had a thickness of 0.75 mm and 0.5 mm, respectively.

In the tires shown in Table 2, the tire-axially outer edge of the jointless band was located on a line extending outwardly from the tire-axially outer edge of the breaker in the radial direction of the tire. In other words, in the tires, the edges of the jointless band were aligned with the edges of the breaker, the jointless band was not in contact with the breaker cushion, and the undertread was in contact with the breaker cushion (see FIG. 1(b)). Similarly, the tires with the U/T formulations A, B and C shown in Table 3 had the same structure.

On the other hand, in the tires with the JLB formulations A, B, C and D shown in Table 3, the jointless band was provided protruding from the edge of the breaker, and the jointless band was thus in contact with the breaker cushion (see FIG. 1(a)).

The obtained vulcanized rubber compositions for a breaker cushion, for an undertread, for a breaker cord topping, and for a band cord topping and test tires were subjected to the following evaluations. Tables 1 to 3 show the results.

(Complex modulus (hardness) (E*), fuel economy (tan δ))

Each of the vulcanized rubber compositions was measured for loss tangent (tan δ) and complex modulus (E*) using a viscoelasticity spectrometer produced by Iwamoto Seisakusho Co., Ltd. at a temperature of 70°C, an initial strain of 10%, a dynamic strain of 2%, and a frequency of 10Hz.

A smaller value of tan δ indicates a lower rolling resistance and better fuel economy. A larger value of E* indicates better handling stability.

(Tensile test)

A No. 3 dumbbell-shaped test piece made of each of the vulcanized rubber compositions was subjected to a tensile test at 25°C in conformity with JIS K 6251 "Rubber, vulcanized or thermoplastics - Determination of tensile stress-strain properties" to determine the elongation at break EB (%). A larger value of EB indicates better elongation at break.

(Durability (tread durability index))

Each of the test tires without rims was placed in a moist-heating oven at 80°C and a relative humidity of 95% for four weeks to be degraded. The degraded test tire was run on a drum under over-load conditions corresponding to 140% of the maximum load (maximum air pressure conditions) defined in the JIS standard, to determine the running distance at which abnormal noise or an abnormal appearance such as a bulge of the tread portion occurred.

The running distance of a reference tire was defined as 100, and the running distance of each of the tires was then expressed as an index relative to the reference tire. Here, the larger the index number, the better the durability (particularly, durability in south-eastern Asia and the south and central areas in Japan). In the tables, the results of durability of the tires of the examples are underlined.

$$\text{(Durability index)} = \text{(Running distance of each tire)} / \text{(Running distance of reference tire)} \times 100$$

[Table 1]

| Formulation (part(s) by mass) | | brk Formulation | | | | | U/T formulation | | | JLB formulation | | | |
|---|---|---|---|---|---|---|---|---|---|---|---|---|---|
| | | A | B | C | D | E | A | B | C | A | B | C | D |
| NR | | 100 | 100 | 100 | 100 | 100 | 100 | 100 | 100 | 70 | 70 | 40 | 70 |
| SBR | | - | - | - | - | - | - | - | - | 30 | 30 | 60 | 30 |
| Carbon black 1 | | 65 | 60 | 60 | 60 | 55 | 65 | 60 | 55 | 45 | 35 | 45 | 35 |
| Silica | | - | 5 | 5 | 5 | 5 | - | 5 | 5 | - | 10 | - | 10 |
| Antioxidant 1 | | 1 | 1 | 1 | 1 | 1 | 2 | 2 | 2 | 1 | 1 | 1 | 1 |
| Antioxidant 2 | | 2 | 2 | 2 | 2 | 2 | 10 | 10 | 10 | 7 | 7 | 7 | 7 |
| Zinc oxide | | 10 | 10 | 10 | 10 | 10 | - | - | - | - | - | - | - |
| Phenol resin PR 12686 | | - | - | - | 3 | - | - | - | - | 1 | 1.5 | 1 | 2 |
| Sumikanol 620 | | - | - | - | - | - | - | - | - | 3 | 3 | 3 | 3 |
| Stearic acid | | - | - | - | - | - | - | - | - | 3 | 3 | 3 | 3 |
| Sumikanol 507A | | - | - | 1.5 | 2 | - | 1.5 | 1.5 | 1.5 | 1.5 | 2 | 1.5 | - |
| Cobalt stearate | | 1.5 | 1.5 | 1.5 | 1.5 | 1.5 | - | - | - | - | - | - | 2.81 |
| Crosslinking agent — 20% oil-containing insoluble sulfur | | 5.63 | 7 | 7.5 | 3.75 | 7.75 | 5.63 | 7 | 7.75 | 3.75 | 3.13 | 3.75 | 2.25 |
| Crosslinking agent — Net sulfur content derived from crosslinking agent | | 4.50 | 5.60 | 6.00 | 3.00 | 6.20 | 4.50 | 5.60 | 6.20 | 3.00 | 2.50 | 3.00 | - |
| Vulcanization accelerator 1 | | 1 | 0.8 | 0.6 | 1 | 0.5 | 1 | 0.8 | 0.5 | - | - | - | 1 |
| Vulcanization accelerator 2 | | - | - | - | - | - | - | - | - | 1 | 1 | 1 | 1 |
| C5 resin | | 1 | 1 | 1 | 1 | 1 | 3 | 3 | 3 | 1 | 1 | 1 | - |
| TDAE | | - | - | - | - | - | - | - | - | - | - | - | - |
| Evaluation — Handling stability ($E^*$ at 70°C) | | 7.15 | 7.5 | 7.61 | 7.95 | 7.65 | 7.15 | 7.5 | 7.65 | 6.05 | 7.05 | 6.45 | 7.12 |
| Evaluation — Fuel economy (tan δ at 70°C) | | 0.127 | 0.129 | 0.122 | 0.145 | 0.113 | 0.127 | 0.129 | 0.113 | 0.104 | 0.111 | 0.122 | 0.119 |
| Evaluation — Elongation at break (EB%, at 25°C, Target ≥350) | | 475 | 505 | 495 | 525 | 505 | 475 | 505 | 505 | 395 | 500 | 345 | 405 |

[Table 2]

| | | Cushion formulation | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Formulation (part(s) by mass) | NR | 80 | 80 | 80 | 80 | 80 | 40 | 40 | 80 | 80 | 80 | 30 | 30 | 80 |
| | IR | 20 | 20 | 20 | 20 | 20 | – | – | 20 | 20 | 20 | – | – | 20 |
| | BR1 (CB24) | – | – | – | – | – | – | – | – | – | – | 70 | 70 | – |
| | BR2 (1250H) | – | – | – | – | – | 30 | 30 | – | – | – | – | – | – |
| | BR3 (VCR617) | – | – | – | – | – | 30 | 30 | – | – | – | – | – | – |
| | Carbon black 1 | 34 | 37 | 65 | 60 | 60 | 34 | – | 31 | 40 | 55 | 40 | 34 | 60 |
| | Carbon black 2 | – | – | – | – | – | – | 37 | – | – | – | – | – | – |
| | Silica | – | – | – | 5 | 5 | – | – | 7 | – | 5 | – | – | 5 |
| | Wax | – | – | – | – | – | – | – | – | – | – | – | – | – |
| | Antioxidant 2 | 2 | 2 | 2 | 2 | 2 | 2 | 2 | 2 | 2 | 2 | 2 | 2 | 2 |
| | Zinc oxide | 5 | 5 | 10 | 10 | 10 | 5 | 5 | 5 | 5 | 10 | 5 | 5 | 10 |
| | Cobalt stearate | – | – | 1.5 | 1.5 | 1.5 | – | – | – | – | 1.5 | – | – | 1.5 |
| | Stearic acid | 2 | 2 | – | – | – | 2 | 2 | 2 | 2 | – | 2 | 2 | – |
| Crosslinking agent | 10% oil-containing insoluble sulfur | 3 | 2.34 | – | – | – | 2.33 | 2.33 | 2.33 | 2 | – | 2 | 3 | – |
| | 20% oil-containing insoluble sulfur | – | – | 5.63 | 7 | 7.5 | – | – | – | – | 7.8 | – | – | 7 |
| | Net sulfur content derived from crosslinking agent | 2.70 | 2.11 | 4.50 | 5.60 | 6.00 | 2.10 | 2.10 | 2.70 | 1.80 | 6.24 | 1.80 | 2.70 | 5.60 |
| | Vulcanization accelerator 2 | 0.9 | 1.1 | – | – | – | 0.8 | 0.8 | 0.9 | 1.3 | – | 1 | 0.9 | – |
| | Vulcanization accelerator 1 | – | – | 1 | 0.8 | 0.6 | – | – | – | – | 0.4 | – | – | 1.2 |
| | C5 resin | 1 | 1 | 2 | 2 | 2 | 1 | 1 | 1 | 1 | 1 | 1 | 1 | 2 |
| | TDAE | 2 | 2 | | | | 8 | 2 | 2 | 2 | 2 | 2 | 2 | – |
| Evaluation | Handling stability (E* at 70°C) | 2.85 | 3.22 | 7.15 | 7.5 | 7.61 | 3.55 | 3.37 | 2.88 | 2.75 | 7.55 | 2.85 | 3.05 | 9.05 |
| | Fuel economy (tan δ at 70°C) | 0.083 | 0.095 | 0.127 | 0.129 | 0.132 | 0.075 | 0.055 | 0.074 | 0.118 | 0.128 | 0.105 | 0.072 | 0.132 |
| | Elongation at break (EB%, at 25°C) | 625 | 550 | 475 | 505 | 495 | 575 | 570 | 680 | 445 | 335 | 345 | 340 | 315 |
| | Difference in sulfur concentration : (brk)– (Cushion) — brk Formulation A (Sulfur: 4.5) | 1.80 | 2.40 | 0.00 | –1.10 | –1.50 | 2.41 | 2.40 | 1.80 | 2.70 | –1.74 | 2.70 | 1.80 | –1.10 |
| | brk Formulation B (Sulfur: 5.6) | 2.90 | 3.49 | 1.10 | 0.00 | –0.40 | 3.50 | 3.50 | 2.90 | 3.80 | –0.64 | 3.80 | 2.90 | 0.00 |
| | brk Formulation C (Sulfur: 6.0) | 3.30 | 3.89 | 1.50 | 0.40 | 0.00 | 3.90 | 3.90 | 3.30 | 4.20 | –0.24 | 4.20 | 3.30 | 0.40 |
| | brk Formulation D (Sulfur: 3.0) | 0.30 | 0.89 | –1.50 | –2.60 | –3.00 | 0.90 | 0.90 | 0.30 | 1.20 | –3.24 | 1.20 | 0.30 | –2.60 |
| | brk Formulation E (Sulfur: 6.2) | 3.50 | 4.09 | 1.70 | 0.60 | 0.20 | 4.10 | 4.10 | 3.50 | 4.40 | –0.04 | 4.40 | 3.50 | 0.60 |
| | Tread durability index (U/T formulation A used) — brk Formulation A (Sulfur: 4.5) | <u>125</u> | <u>110</u> | <u>105</u> | 90 | 85 | <u>125</u> | <u>130</u> | <u>135</u> | 100 | 50 | 65 | 95 | 40 |
| | brk Formulation B (Sulfur: 5.6) | <u>135</u> | <u>115</u> | <u>105</u> | <u>100</u> | 95 | <u>130</u> | <u>125</u> | <u>145</u> | 90 | 65 | 60 | 90 | 50 |
| | brk Formulation C (Sulfur: 6.0) | <u>130</u> | <u>105</u> | <u>105</u> | <u>100</u> | <u>100</u> | <u>120</u> | <u>120</u> | <u>150</u> | 65 | 70 | 45 | 85 | 55 |
| | brk Formulation D (Sulfur: 3.0) | <u>120</u> | <u>115</u> | 90 | 75 | 70 | <u>120</u> | <u>125</u> | <u>135</u> | 95 | 45 | 85 | 90 | 35 |
| | brk Formulation E (Sulfur: 6.2) | <u>115</u> | 90 | <u>110</u> | <u>100</u> | <u>100</u> | 95 | 98 | <u>125</u> | 60 | 75 | 75 | 75 | 50 |

(Examples: underlined)

[Table 3]

| | | | Cushion formulation | | | | |
|---|---|---|---|---|---|---|---|
| | | | 1 | 2 | 3 | 4 | 5 |
| Formulation (part(s) by mass) | NR | | 80 | 80 | 80 | 80 | 80 |
| | IR | | 20 | 20 | 20 | 20 | 20 |
| | BR1(CB24) | | – | – | – | – | – |
| | BR2(1250H) | | – | – | – | – | – |
| | BR3(VCR617) | | – | – | – | – | – |
| | Carbon black 1 | | 34 | 37 | 65 | 60 | 60 |
| | Carbon black 2 | | – | – | – | – | – |
| | Silica | | – | – | – | 5 | 5 |
| | Wax | | – | – | – | – | – |
| | Antioxidant 2 | | 2 | 2 | 2 | 2 | 2 |
| | Zinc oxide | | 5 | 5 | 10 | 10 | 10 |
| | Cobalt stearate | | – | – | 1.5 | 1.5 | 1.5 |
| | Stearic acid | | 2 | 2 | – | – | – |
| | Crosslinking agent | 10% oil-containing insoluble sulfur | 3 | 2.34 | – | – | – |
| | | 20% oil-containing insoluble sulfur | – | – | 5.63 | 7 | 7.5 |
| | | Net sulfur content derived from crosslinking agent | 2.70 | 2.11 | 4.50 | 5.60 | 6.00 |
| | Vulcanization accelerator 2 | | 0.9 | 1.1 | – | – | – |
| | Vulcanization accelerator 1 | | – | – | 1 | 0.8 | 0.6 |
| | C5 resin | | 1 | 1 | 2 | 2 | 2 |
| | TDAE | | 2 | 2 | – | – | – |
| Evaluation | Handling stability (E* at 70°C) | | 2.85 | 3.22 | 7.15 | 7.5 | 7.61 |
| | Fuel economy (tan δ at 70°C) | | 0.083 | 0.095 | 0.127 | 0.129 | 0.132 |
| | Elongation at break (EB%, at 25°C) | | 625 | 550 | 475 | 505 | 495 |
| | Difference in sulfur concentration: (JLB or U/T)–(Cushion) | U/T formulation A (Sulfur: 4.5) | 1.80 | 2.40 | 0.00 | – | – |
| | | U/T formulation B (Sulfur: 5.6) | 2.90 | 3.49 | 1.10 | – | – |
| | | U/T formulation C (Sulfur: 6.2) | 3.50 | 4.09 | 1.70 | – | – |
| | | JLB formulation A (Sulfur: 3.0, SBR: 30) | 0.30 | 0.89 | −1.50 | – | – |
| | | JLB formulation B (Sulfur: 2.5, SBR: 30) | −0.20 | 0.39 | −2.00 | – | – |
| | | JLB formulation C (Sulfur: 3.0, SBR: 60) | 0.30 | 0.89 | −1.50 | – | – |
| | | JLB formulation D (Sulfur: 2.25, SBR: 30) | −0.45 | 0.14 | −2.25 | −3.35 | −3.75 |
| | Tread durability index (brk formulation A used) | U/T formulation A (Sulfur: 4.5) | _125_ | _110_ | _105_ | – | – |
| | | U/T formulation B (Sulfur: 5.6) | _130_ | _105_ | _108_ | – | – |
| | | U/T formulation C (Sulfur: 6.2) | _106_ | _105_ | _103_ | – | – |
| | | JLB formulation A (Sulfur: 3.0, SBR: 30) | _130_ | _115_ | _110_ | – | – |
| | | JLB formulation B (Sulfur: 2.5, SBR: 30) | _140_ | _130_ | _115_ | – | – |
| | | JLB formulation C (Sulfur: 3.0, SBR: 60) | _115_ | _110_ | _110_ | – | – |
| | | JLB formulation D (Sulfur: 2.25, SBR: 30) | _120_ | _115_ | _110_ | 95 | 80 |
| | Difference in sulfur concentration: (brk)–(Cushion) | | 1.80 | 2.40 | 0.00 | −1.10 | −1.50 |

(Examples: underlined)

Pneumatic tires having the following features were excellent in durability: the pneumatic tires included a breaker cushion and a breaker adjacent to the breaker cushion; the breaker cushion was formed from a rubber composition for a breaker cushion, which contained a specific amount of an isoprene-based rubber, had a specific net sulfur content derived from crosslinking agents and had an elongation at break of a specific value or more; the breaker included breaker cords topped with a rubber composition for a breaker cord topping; and the net sulfur content derived from crosslinking agents in the rubber composition for a breaker cushion and the net sulfur content derived from crosslinking agents in the rubber composition for a breaker cord topping satisfied a specific relation. In addition, these pneumatic tires achieved favorable handling stability, fuel economy, and elongation at break simultaneously.

**Claims**

1. A pneumatic tire, comprising a breaker cushion and a breaker adjacent to the breaker cushion,
   wherein the breaker cushion is formed from a rubber composition for a breaker cushion, which contains an isoprene-based rubber in an amount of 35 to 100% by mass based on 100% by mass of a rubber component of the rubber composition for a breaker cushion and has a net sulfur content derived from crosslinking agents of 2.1 to 6.0 parts by mass for each 100 parts by mass of the rubber component, and
   the breaker comprises breaker cords topped with a rubber composition for a breaker cord topping,
   wherein a rubber vulcanizate obtained by vulcanizing the rubber composition for a breaker cushion alone at 170°C for 12 minutes, has an elongation at break of 350% or more, and
   the net sulfur content derived from crosslinking agents in the rubber composition for a breaker cushion and a net sulfur content derived from crosslinking agents in the rubber composition for a breaker cord topping satisfy the following relation:

```
    0.00 < (the net sulfur content derived from crosslinking
agents in the rubber composition for a breaker cord topping)
- (the net sulfur content derived from crosslinking agents in
the rubber composition for a breaker cushion) < 3.99.
```

2. The pneumatic tire according to claim 1,
   further comprising a jointless band or undertread, each adjacent to the breaker cushion,
   wherein the jointless band comprises band cords topped with a rubber composition for a band cord topping, and the undertread is formed from a rubber composition for an undertread,
   wherein the net sulfur content derived from crosslinking agents in the rubber composition for a breaker cushion and a net sulfur content derived from crosslinking agents in the rubber composition for a band cord topping or for an undertread satisfy the following relation:

```
   -3.2 < (the net sulfur content derived from crosslinking
agents in the rubber composition for a band cord topping or for
an undertread) - (the net sulfur content derived from
crosslinking agents in the rubber composition for a breaker
cushion) < 3.0.
```

3. The pneumatic tire according to claim 2,
   wherein the rubber composition for a band cord topping or for an undertread contains an isoprene-based rubber in an amount of 50 to 100% by mass based on 100% by mass of a rubber component of the rubber composition for a band cord topping or for an undertread, and has a net sulfur content derived from crosslinking agents of 2.5 to 6.0 parts by mass for each 100 parts by mass of the rubber component,
   a rubber vulcanizate obtained by vulcanizing the rubber composition for a band cord topping or for an undertread alone at 170°C for 12 minutes, has an elongation at break of 350% or more, and
   the jointless band or undertread has a thickness of 0.2 to 1.5 mm.

4. The pneumatic tire according to anyone of claims 1 to 3,
   wherein the rubber composition for a breaker cushion contains the isoprene-based rubber in an amount of 85% by mass or more based on 100% by mass of the rubber component thereof.

**Patentansprüche**

1. Luftreifen umfassend ein Breakerkissen und einen Breaker, welcher benachbart zu dem Breakerkissen ist, wobei das Breakerkissen aus einer Kautschukzusammensetzung für ein Breakerkissen gebildet ist, welche einen auf Isopren basierenden Kautschuk in einer Menge von 35 bis 100 Massen-% bezogen auf 100 Massen-% der Kautschukkomponente der Kautschukzusammensetzung für ein Breakerkissen enthält und einen von den Vernetzungsmitteln stammenden Nettoschwefelgehalt von 2,1 bis 6,0 Massenteilen bezogen auf jede 100 Massenteile der Kautschukkomponente aufweist, und der Breaker Breakercorde enthält, welche mit einer Kautschukzusammensetzung für eine Breakercordgummierung gummiert sind, wobei das Kautschukvulkanisat, welches durch Vulkanisation der Kautschukzusammensetzung für ein Breakerkissen allein bei 170°C für 12 Minuten erhalten worden ist, eine Bruchdehnung von 350 % oder mehr aufweist und der von den Vernetzungsmitteln stammende Nettoschwefelgehalt in der Kautschukzusammensetzung für ein Breakerkissen und der von den Vernetzungsmitteln stammende Nettoschwefelgehalt in der Kautschukzusammensetzung für eine Breakercordgummierung die nachfolgende Beziehung erfüllen:

0,00 < (von den Vernetzungsmitteln in der Kautschukzusammensetzung für eine Breakercordgummierung stammender Nettoschwefelgehalt) – (von den Vernetzungsmitteln in der Kautschukzusammensetzung für ein Breakerkissen stammender Nettoschwefelgehalt) < 3,99.

2. Luftreifen nach Anspruch 1, welcher des Weiteren ein verbindungsloses Band oder eine Unterlauffläche umfasst, welche jeweils benachbart zu dem Breakerkissen sind, wobei das verbindungslose Band Corde enthält, welche mit einer Kautschukzusammensetzung für eine Bandcordgummierung gummiert sind, und die Unterlauffläche aus einer Kautschukzusammensetzung für eine Unterlauffläche gebildet ist, wobei der von den Vernetzungsmitteln in der Kautschukzusammensetzung für ein Breakerkissen stammende Nettoschwefelgehalt und der von den Vernetzungsmitteln in der Kautschukzusammensetzung für eine Bandcordgummierung oder für eine Unterlauffläche stammende Nettoschwefelgehalt die nachfolgende Beziehung erfüllen:

-3,2 < (von den Vernetzungsmitteln in der Kautschukzusammensetzung für eine Bandcordgummierung oder für eine Unterlauffläche stammender Nettoschwefelgehalt) – (von den Vernetzungsmitteln in der Kautschukzusammensetzung für ein Breakerkissen stammender Nettoschwefelgehalt) < 3,0.

3. Luftreifen nach Anspruch 2, wobei die Kautschukzusammensetzung für eine Bandcordgummierung oder für eine Unterlauffläche einen auf Isopren basierenden Kautschuk in einer Menge von 50 bis 100 Massen-% bezogen auf 100 Massen-% der Kautschukkomponente der Kautschukzusammensetzung für eine Bandcordgummierung oder für eine Unterlauffläche enthält und einen von den Vernetzungsmitteln stammenden Nettoschwefelgehalt von 2,5 bis 6,0 Massenteilen bezogen auf jede 100 Massenteile der Kautschukkomponente aufweist, das durch Vulkanisieren der Kautschukzusammensetzung für eine Bandcordgummierung oder für eine Unterlauffläche alleine bei 170°C für 12 Minuten erhaltene Kautschukvulkanisat eine Bruchdehnung von 350 % oder mehr aufweist und das verbindungslose Band oder die Unterlauffläche eine Dicke von 0,2 bis 1,5 mm aufweist.

4. Luftreifen nach einem der Ansprüche 1 bis 3, wobei die Kautschukzusammensetzung für ein Breakerkissen den auf Isopren basierenden Kautschuk in einer Menge von 85 Massen-% oder mehr bezogen auf 100 Massen-% der Kautschukkomponente enthält.

**Revendications**

1. Bandage pneumatique, comprenant un coussin de ceinture et une ceinture adjacente au coussin de ceinture, dans lequel le coussin de ceinture est formé d'une composition en caoutchouc pour coussin de ceinture, qui contient un caoutchouc à base d'isoprène dans une quantité de 35 à 100 % en masse sur la base de 100 % en masse d'un composant caoutchouc de la composition en caoutchouc pour coussin de ceinture et présente une teneur en soufre nette, dérivée des agents de réticulation, de 2,1 à 6,0 parties en masse pour chaque 100 parties en masse du composant caoutchouc, et
la ceinture comprend des câblés de ceinture enrobés d'une composition en caoutchouc pour enrobage de câblés de ceinture,
dans lequel un caoutchouc vulcanisé obtenu par vulcanisation de la composition en caoutchouc pour coussin de ceinture seule à 170° pendant 12 minutes, présente un allongement à la rupture de 350 % ou plus, et
la teneur nette en soufre dérivé des agents de réticulation dans la composition en caoutchouc pour coussin de ceinture et une teneur nette en soufre dérivé des agents de réticulation dans la composition en caoutchouc pour enrobage de câblés de ceinture satisfont la relation suivante :

$$0,00 < [\text{teneur nette en soufre dérivé des agents de réticulation dans la composition en caoutchouc pour enrobage de câblés de ceinture}] - [\text{teneur nette en soufre dérivé des agents de réticulation dans la composition en caoutchouc pour coussin de ceinture}] < 3,99.$$

2. Bandage pneumatique selon la revendication 1,
comprenant en outre une bande sans jointure ou sous-couche de bande de roulement, chacune étant adjacente au coussin de ceinture,
dans lequel la bande sans jointure comprend des câblés de bande enrobés d'une composition en caoutchouc pour enrobage de câblés de bande, et
la sous-couche de bande de roulement est formée d'une composition en caoutchouc pour sous-couche de bande de roulement,
dans lequel la teneur nette en soufre dérivé des agents de réticulation dans la composition en caoutchouc pour coussin de ceinture et une teneur nette en soufre dérivé des agents de réticulation dans la composition à caoutchouc pour enrobage de câblés de bande ou pour une sous-couche de bande de roulement satisfont la relation suivante :

$$-3,2 < [\text{teneur nette en soufre dérivé des agents de réticulation dans la composition en caoutchouc pour enrobage de câblés de bande ou pour sous-couche de bande de roulement}] - [\text{teneur nette en soufre dérivé des agents de réticulation dans la composition en caoutchouc pour coussin de ceinture}] < 3,0.$$

3. Bandage pneumatique selon la revendication 2,
dans lequel la composition en caoutchouc pour un enrobage de câblés de bande ou pour une sous-couche de bande de roulement contient un caoutchouc à base d'isoprène dans une quantité de 50 à 100 % en masse basée sur 100 % en masse d'un composant caoutchouc de la composition en caoutchouc pour un enrobage de câblés de bande ou pour une sous-couche de bande de roulement, et présente une teneur nette en soufre dérivé des agents de réticulation de 2,5 à 6,0 parties en masse pour chaque 100 parties en masse du composant caoutchouc,
un caoutchouc vulcanisé obtenu par vulcanisation de la composition en caoutchouc pour un enrobage de câblés de bande ou pour une sous-couche de bande de roulement seul à 170° C pendant 12 minutes, présente un allongement à la rupture de 350 % ou plus, et
la bande sans jointure ou la sous-couche de bande de roulement a une épaisseur de 0,2 à 1,5 mm.

4. Bandage pneumatique selon l'une quelconque des revendications 1 à 3,
   dans lequel la composition en caoutchouc pour coussin de ceinture contient le caoutchouc à base d'isoprène dans une quantité de 85 % en masse ou plus, sur la base de 100 % en masse du composant caoutchouc de celui-ci.

# FIG.1

(a)

(b)

(c)

(d)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4308289 B
- JP 2008024913 A
- JP 4246245 B
- JP 2009137438 A
- JP 2006273934 A
- JP 2004161862 A
- JP 2003094918 A
- JP 2009007437 A
- JP 2009191132 A